# EUROPÄISCHE PATENTANMELDUNG

(11) **EP 1 548 555 A2**
(43) Veröffentlichungstag der Anmeldung: **29.06.2005**
(21) Anmeldenummer: 04027276.7
(22) Anmeldetag: 17.11.2004
(51) Int. Cl.: G06F 3/033

(54) **Gleitflächen für Computermäuse und damit ausgestattete Computermäuse**

(30) Priorität: 19.11.2003 DE 20317906 U
(71) Anmelder: Kupilas, Manolito, 38102 Braunschweig (DE)
(72) Erfinder: Kupilas, Manolito, 38102 Braunschweig (DE)
(74) Vertreter: Ahrens, Gabriele, Dr.

(57) **Zusammenfassung**

Die vorliegende Anmeldung betrifft Füßchen für Computermäuse bestehend aus einem Material ausgewählt unter einer Keramik oder Porzellan.

## Beschreibung

Die vorliegende Erfindung betrifft Computermäuse wie sie als Peripheriegeräte zur Dateneingabe in Computer verwendet werden und, insbesondere, Füßchen oder Gleitflächen auf der Unterseite dieser Computermäuse.

Aufbau und Funktionsweise von Computermäusen sind an sich bekannt.
Für die Dateneingabe wird die Maus von dem Benutzer mit einer Hand auf einer Auflagefläche hin und her bewegt, wobei durch die Bewegung der Maus auf einem Monitor ein Zeiger, Cursor, an eine gewünschte Position, wie eine Schaltfläche, gebracht wird und durch Druck auf eine Taste auf dem Rücken der Maus die Dateneingabe bewirkt wird.

Durch die Bewegung der Maus auf der Auflagefläche wird eine Reibung erzeugt. Diese Reibung wirkt der Gleitfähigkeit der Maus entgegen. Ein gleichmäßiges Gleiten der Maus ist aber Voraussetzung für eine exakte und schnelle Positionierung des Zeigers am Monitor und damit für ein möglichst schnelles und sicheres Arbeiten.

Des weiteren erhöht die Reibung den Kraftaufwand, den der Benutzer der Maus erbringen muss. Zwar ist im allgemeinen die Kraft, die zur Bewegung der Maus aufgebracht werden, muss relativ gering, jedoch kann eine relativ hohe Reibung bei dem Benutzer insbesondere im Langzeitbetrieb zu einer schnelleren Ermüdung der Eingabehand führen.

Die Reibung zwischen Auflagefläche und Unterseite der Maus führt zudem zu einem Verschleiß der Unterseite der Maus beziehungsweise der auf der Unterseite der Maus aufgebrachten, erhabenen Gleitflächen (nachfolgend auch als "Füßchen" bezeichnet).

Für eine gute und verschleißfreie Handhabung einer Computermaus ist daher eine gute Gleitfähigkeit bei möglichst geringer Reibung wünschenswert.

Es ist bekannt, die Gleitflächen auf der Unterseite einer Computermaus mit Teflon zu beschichten, um deren Gleitfähigkeit zu erhöhen. Es hat sich jedoch gezeigt, dass diese Teflonbeschichtung relativ schnell verschleißt.

Es war daher Aufgabe der vorliegenden Erfindung, Mittel bereitzustellen, mit denen Computermäuse mit guter Gleitfähigkeit versehen werden können, und die gleichzeitig eine hohe Widerstandskraft aufweisen, so dass kein oder nur geringer Verschleiß auftritt.

Erfindungsgemäß wird diese Aufgabe gelöst, indem für Computermäuse Füßchen oder Gleitflächen vorgesehen werden, die aus einem Keramikmaterial oder Porzellan bestehen.

Keramiken oder Porzellan sind äußerst reibungsfeste Materialien, sodass der Verschleiß, der bei Bewegung der Computermaus auf einer Auflagefläche auftritt, gering gehalten werden kann.
Zudem lassen sich aus diesen Materialien Formkörper mit glatter Oberfläche erhalten, sodass die Gleitfähigkeit der daraus erhaltenen Füßchen oder Gleitflächen gewährleistet ist.

Gemäß einer Ausführungsform wird die Oberfläche der Füßchen, insbesondere der Teil der Oberfläche der Füßchen, der mit der Auflagefläche in Kontakt ist, mit einer Lasur versehen.
Durch die Lasur lässt sich nicht nur die Glätte und damit die Gleitfähigkeit verbessern, sondern auch die Verschleißfestigkeit.

Zur Herstellung der erfindungsgemäßen Füßchen wird das Ausgangsmaterial in Formen mit der gewünschten Gestalt eingebracht und dort gebrannt. Vorzugsweise werden Formen aus Metall verwendet. Diese weisen eine glatte Oberfläche auf, sodass die darin angefertigten Formkörper, hier die Füßchen, ebenfalls eine glatte Oberfläche zeigen.

Beispiele für geeignete Keramiken für die Herstellung der erfindungsgemäßen Füßchen für Computermäuse sind zum Beispiel Dentalkeramiken, denen eine hohe Verschleißbeständigkeit inhärent ist oder Keramiken mit entsprechenden Eigenschaften in Hinblick auf Beständigkeit.

Die als Ausgangsmaterial für Dentalkeramiken eingesetzten Pulvermischungen umfassen üblicherweise Siliziumdioxid (SiO₂), Aluminiumoxid (Al₂O₃), Kaliumoxid (K₂O), Natriumoxid (Na₂O) und bei Bedarf Calciumoxid (CaO). Zudem können weitere übliche Zusätze vorhanden sein, wie Pigmente für die Farbgebung.

Eine geeignete Ausgangsmischung einer Dentalkeramik zur Herstellung der erfindungsgemäßen Füßchen umfasst, in Massenprozent ausgedrückt, 10 bis 70 % Siliziumdioxid, 10 bis 20 % Aluminiumoxid, 10 bis 15% Kaliumoxid, 5 bis 10% Natriumoxid und 0 bis 2% Calciumoxid.
Zur Farbgebung können Pigmente zum Beispiel in einem Gehalt von 1 bis 3 Massenprozent zugesetzt werden.

Derartige Ausgangsmischungen werden zum Beispiel unter der Produktbezeichnung Carrara Interaction Enamel, Carrara Interaction Dentin und Carrara Interaction Paint von ELEPHANT Dental B.V., Verlengde Lageweg 10, 1628 PM Hoorn, Niederlande vertreiben.

Ein weiteres Beispiel für eine geeignete Zusammensetzung umfasst 31 bis 37 % Siliziumdioxid, 6 bis 9% Aluminiumoxid, 6 bis 9% Kaliumoxid, 2 bis 4% Natriumoxid, 10 bis 15% Zinnoxid, 4 bis 6% Titanoxid und 20 bis 30% 1,3-Butandiol sowie gegebenenfalls 4 bis 6% Pigmente. Eine derartige Zusammensetzung wird unter der Produktbezeichnung Carrara Interaction Pasten Opaker von ELEPHANT Dental B.V. wie vorstehend angeben, vertrieben.

Zur Lasierung der Oberfläche von Füßchen, die aus den Dentalkeramiken erhalten worden sind, werden vorzugsweise Lasuren eingesetzt, wie sie im Dentalbereich hierfür entwickelt worden sind, wie zum Beispiel Malfarbenflüssigkeiten für Dentalkeramiken. Beispielhaft wird auf Malfarbenflüssigkeit verwiesen, wie sie von der Firma DeguDent GmbH, Hanau, Deutschland, vertrieben wird. Selbstverständlich können auch andere Lasuren eingesetzt werden, sofern sie die gewünschte Beständigkeit aufweisen.

Für die Herstellung wird das Ausgangsmaterial für die Dentalkeramik mit einer geeigneten Menge Lösungsmittel, zum Beispiel destillierten Wasser, vermischt, sodass eine formbare Masse erhalten wird. Die formbare Masse oder Paste wird zur Formgebung in eine Form mit der gewünschten Gestalt gefüllt, entsprechend geformt entnommen, und üblicherweise bei 800 °C bis 1000°C ca. 10 Minuten gebrannt. Als besonders geeignet haben sich Formen aus Edelmetall wie Gold oder Platin herausgestellt.

Wird eine Lasur vorgesehen, wird das Ausgangsmaterial für die Lasur auf den beim ersten Brand erhaltenen Formkörper aufgetragen und ein zweiter Brand im gleichen Temperaturbereich für etwa 10 Minuten durchgeführt.

Die erhaltenen lasierten Formkörper in der für die Füßchen für Computermäuse gewünschten Gestalt werden aus der Form herausgenommen, bei Bedarf nachbearbeitet, und auf der Unterseite der Maus befestigt.

Die Art der Befestigung ist an sich nicht kritisch ist, sollte jedoch dauerhaft sein, um ein vorzeitiges Abfallen der Füßchen zu vermeiden. Beispiele für geeignete Befestigungsmittel sind Sekundenkleber, Haftfolien etc..

## Patentansprüche

1. Füßchen für Computermäuse bestehend aus einem Material ausgewählt unter einer Keramik oder Porzellan.

2. Füßchen für Computermäuse nach Anspruch 1,
**dadurch gekennzeichnet,**
**dass** die Oberfläche der Füßchen zumindest in dem Bereich mit einer Lasur versehen sind, der in Betrieb mit einer Auflagefläche in Kontakt ist.

3. Füßchen für Computermäuse nach einem der vorhergehenden Ansprüche,
**dadurch gekennzeichnet,**
**dass** die Füßchen aus einer Dentalkeramik oder einer Keramik mit entsprechenden Eigenschaften hergestellt sind.

4. Füßchen für Computermäuse nach einem der vorhergehenden Ansprüche,
**dadurch gekennzeichnet,**
**dass** die Lasur eine Lasur für Dentalkeramiken oder eine entsprechende Lasur ist.

5. Computermäuse,
**dadurch gekennzeichnet,**
**dass** die Computermäuse Füßchen nach einem der vorhergehenden Ansprüche aufweisen.
